# EUROPEAN PATENT SPECIFICATION

(11) **EP 1 461 874 B1**
(45) Date of publication and mention of the grant of the patent: **13.07.2005**
(21) Application number: 02787842.0
(22) Date of filing: 27.11.2002
(51) Int. Cl.: H04B 7/26, H04Q 7/36, H04L 1/00

(54) **TRANSPORT FORMAT COMBINATION INDICATOR SIGNALLING**
SIGNALISIERUNG DURCH TRANSPORT FORMAT COMBINATION INDICATOR
SIGNALISATION PAR UN INDICATEUR DE LA COMBINAISON DU FORMAT DE TRANSPORT

(30) Priority: 31.12.2001 US 29929
(43) Date of publication of application: 29.09.2004
(73) Proprietor: Nokia Corporation, 02150 Espoo (FI)
(72) Inventor: BYSTED, Tommy, Kristensen, DK-2765 Smoerum (DK); PEDERSEN, Kent, DK-2000 Frederiksberg (DK)
(74) Representative: Geary, Stuart Lloyd
(86) International application number: PCT/EP2002/013355
(87) International publication number: WO 2003/056722

(56) References cited:
- EP-A- 1 009 174
- WO-A-01/56314
- "UMTS TERRESTRIAL RADIO ACCESS (UTRAN); UTRA FDD, MULTIPLEXING, CHANNEL CODING AND INTERLEAVING DESCRIPTION (UMTS XX.04 version 1.0.0)" TD RAN RAN-99026, UMTS XX.04 V1.0.0, ETSI, TECHNICAL REPORT, February 1999 (1999-02), pages 1-16, XP002206095

## Description

### Field of the Invention

The present invention relates to a mobile communication system.

### Background to the Invention

The concept of transport channels is known from UTRAN (Universal mobile Telecommunications System Radio Access Network). Each of these transport channels can carry a bit class having a different quality of service (QoS) requirement. A plurality of transport channels can be multiplexed and sent in the same physical channel.

Document EP 1009174 discloses the preamble of independent claims 1 and 4.

### Summary of the Invention

It is an object of the present invention to provide a system m which variable sets of transport channel configurations can be used.

According to the present invention, there is provided a method of transmitting a radio signal according to claim 1.

According to the present invention, there is also provided a radio transmitter according to claim 4.

Preferably, said physical layer signal comprises a TDMA signal and said code is transmitted in predetermined locations. More preferably, said code is distributed across a plurality of bursts, e.g. the bursts comprising one radio block.

### Brief Description of the Drawings

Figure 1 shows a mobile communication system according to the present invention;
Figure 2 is a block diagram of a mobile station;
Figure 3 is a block diagram of a base transceiver station;
Figure 4 illustrates the frame structure used in an embodiment of the present invention;
Figure 5 illustrates a packet data channel in an embodiment of the present invention;
Figure 6 illustrates the sharing of a radio channel between two half-rate packet channels in an embodiment of the present invention;
Figure 7 illustrates the lower levels of a protocol stack used in an embodiment of the present invention;
Figure 8 illustrates the generation of a radio signal by a first embodiment of the present invention;
Figure 9 illustrates a data burst generated by a first embodiment of the present invention;
Figure 10 illustrates the generation of a radio signal by a second embodiment of the present invention; and
Figure 11 illustrates part of a reception process adapted for receiving signals produced by the second embodiment of the present invention.

### Detailed Description of the Preferred Embodiment

A preferred embodiment of the present invention will now be described, by way of example, with reference to the accompanying drawings.

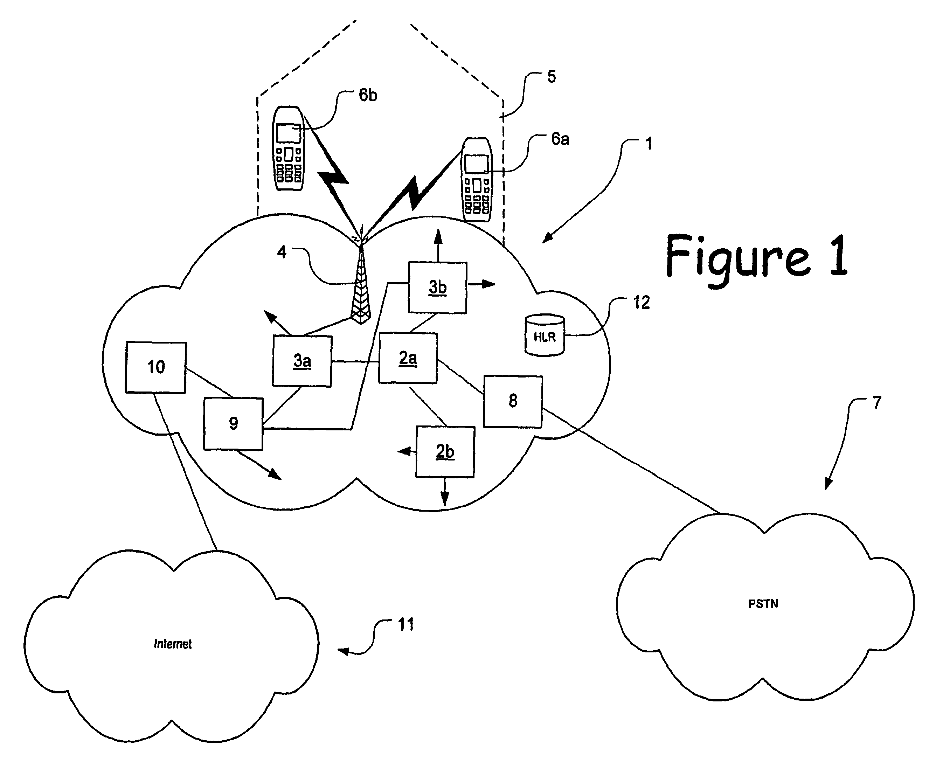

Referring to Figure 1, a mobile phone network 1 comprises a plurality of switching centres including first and second switching centres 2a, 2b. The first switching centre 2a is connected to a plurality of base station controllers including first and second base station controllers 3a, 3b. The second switching centre 2b is similarly connected to a plurality of base station controllers (not shown).

The first base station controller 3a is connected to and controls a base transceiver station 4 and a plurality of other base transceiver stations. The second base station controller 3b is similarly connected to and controls a plurality of base transceiver stations (not shown).

In the present example, each base transceiver station services a respective cell.
Thus, the base transceiver station 4 services a cell 5. However, a plurality of cells may be serviced by one base transceiver station by means of directional antennas. A plurality of mobile stations 6a, 6b are located in the cell 5. It will be appreciated what the number and identities of mobile stations in any given cell will vary with time.

The mobile phone network 1 is connected to a public switched telephone network 7 by a gateway switching centre 8.

A packet service aspect of the network includes a plurality of packet service support nodes (one shown) 9 which are connected to respective pluralities of base station controllers 3a, 3b. At least one packet service support gateway node 10 connects the or each packet service support node 10 to the Internet 11.

The switching centres 3a, 3b and the packet service support nodes 9 have access to a home location register 12.

Communication between the mobile stations 6a, 6b and the base transceiver station 4 employs a time-division multiple access (TDMA) scheme.

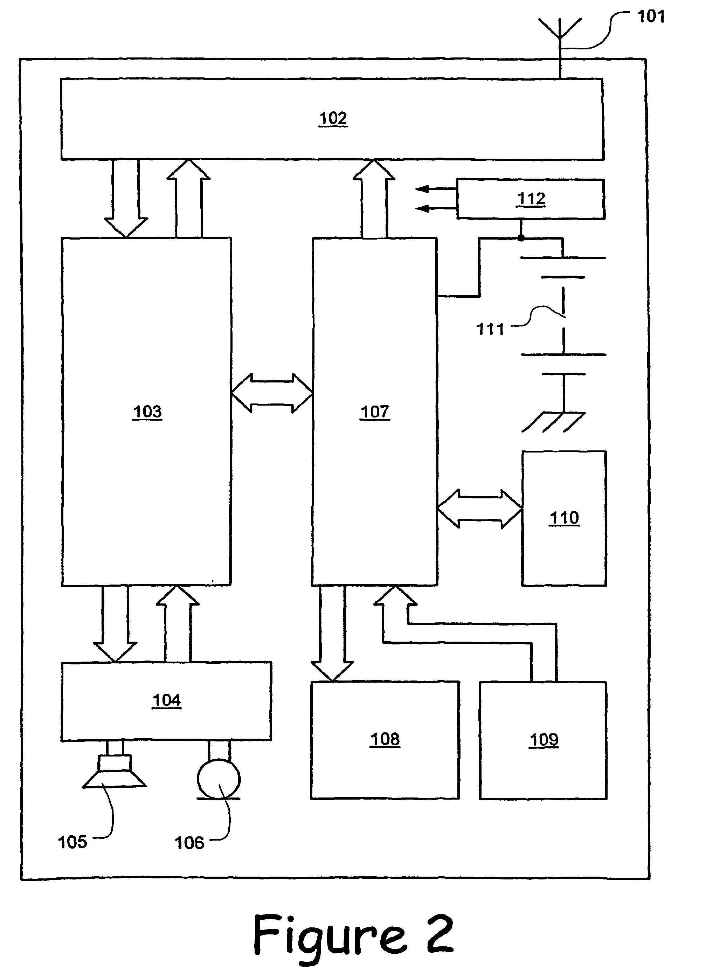

Referring to Figure 2, the first mobile station 6a comprises an antenna 101, an rf subsystem 102, a baseband DSP (digital signal processing) subsystem 103, an analogue audio subsystem 104, a loudspeaker 105, a microphone 106, a controller 107, a liquid crystal display 108, a keypad 109, memory 110, a battery 111 and a power supply circuit 112.

The rf subsystem 102 contains if and rf circuits of the mobile telephone's transmitter and receiver and a frequency synthesizer for tuning the mobile station's transmitter and receiver. The antenna 101 is coupled to the rf subsystem 102 for the reception and transmission of radio waves.

The baseband DSP subsystem 103 is coupled to the rf subsystem 102 to receive baseband signals therefrom and for sending baseband modulation signals thereto. The baseband DSP subsystems 103 includes codec functions which are well-known in the art.

The analogue audio subsystem 104 is coupled to the baseband DSP subsystem 103 and receives demodulated audio therefrom. The analogue audio subsystem 104 amplifies the demodulated audio and applies it to the loudspeaker 105. Acoustic signals, detected by the microphone 106, are pre-amplified by the analogue audio subsystem 104 and sent to the baseband DSP subsystem 4 for coding.

The controller 107 controls the operation of the mobile telephone. It is coupled to the rf subsystem 102 for supplying tuning instructions to the frequency synthesizer and to the baseband DSP subsystem 103 for supplying control data and management data for transmission. The controller 107 operates according to a program stored in the memory 110. The memory 110 is shown separately from the controller 107. However, it may be integrated with the controller 107.

The display device 108 is connected to the controller 107 for receiving control data and the keypad 109 is connected to the controller 107 for supplying user input data signals thereto.

The battery 111 is connected to the power supply circuit 112 which provides regulated power at the various voltages used by the components of the mobile telephone.

The controller 107 is programmed to control the mobile station for speech and data communication and with application programs, e.g. a WAP browser, which make use of the mobile station's data communication capabilities.

The second mobile station 6b is similarly configured.

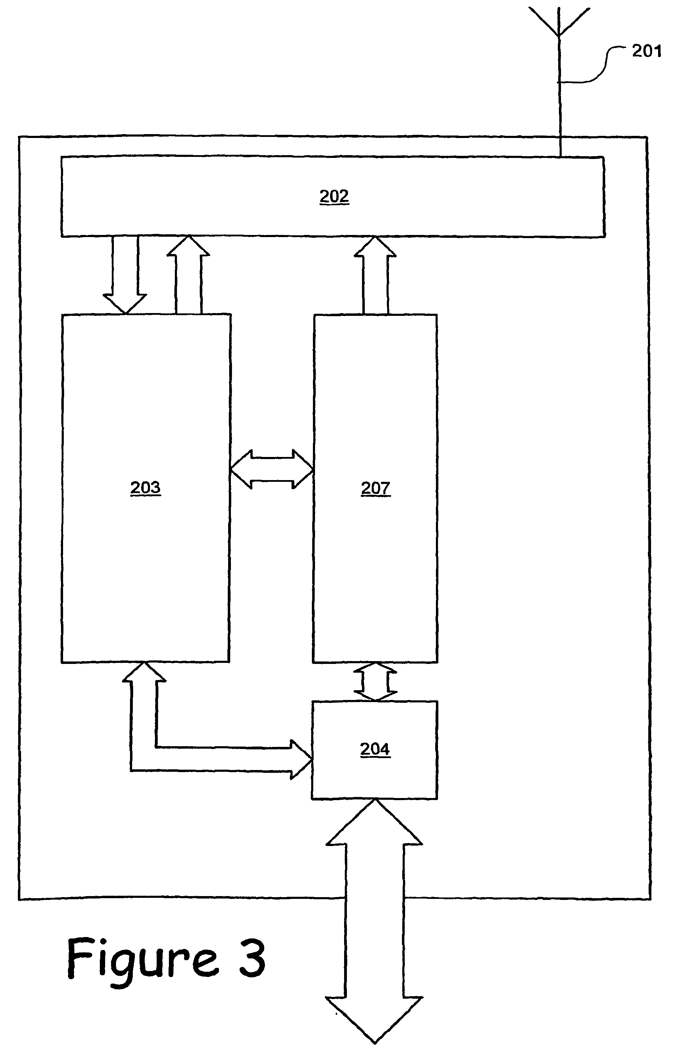

Referring to Figure 3, greatly simplified, the base transceiver station 4 comprises an antenna 201, an rf subsystem 202, a baseband DSP (digital signal processing) subsystem 203, a base station controller interface 204 and a controller 207.

The rf subsystem 202 contains the if and rf circuits of the base transceiver station's transmitter and receiver and a frequency synthesizer for tuning the base transceiver station's transmitter and receiver. The antenna 201 is coupled to the rf subsystem 202 for the reception and transmission of radio waves.

The baseband DSP subsystem 203 is coupled to the rf subsystem 202 to receive baseband signals therefrom and for sending baseband modulation signals thereto. The baseband DSP subsystems 203 includes codec functions which are well-known in the art.

The base station controller interface 204 interfaces the base transceiver station 4 to its controlling base station controller 3a.

The controller 207 controls the operation of the base transceiver station 4. It is coupled to the rf subsystem 202 for supplying tuning instructions to the frequency synthesizer and to the baseband DSP subsystem for supplying control data and management data for transmission. The controller 207 operates according to a program stored in the memory 210.

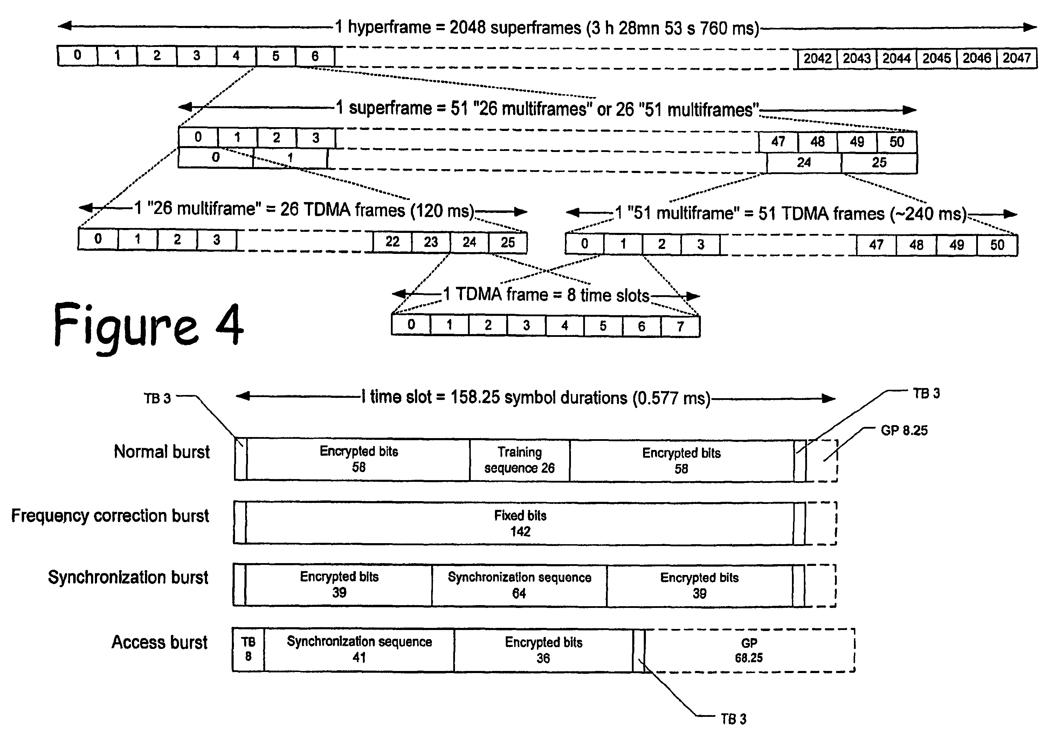

Referring to Figure 4, each TDMA frame, used for communication between the mobile stations 6a, 6b and the base transceiver stations 4, comprises eight 0.577ms time slots. A "26 multiframe" comprises 26 frames and a "51 multiframe" comprises 51 frames. Fifty one "26 multiframes" or twenty six "51 multiframes" make up one superframe. Finally, a hyperframe comprises 2048 superframes.

The data format within the time slots varies according to the function of a time slot. A normal burst, i.e. time slot, comprises three tail bits, followed by 58 encrypted data bits, a 26-bit training sequence, another sequence of 58 encrypted data bits and a further three tail bits. A guard period of eight and a quarter bit durations is provided at the end of the burst. A frequency correction burst has the same tail bits and guard period. However, its payload comprises a fixed 142 bit sequence. A synchronization burst is similar to the normal burst except that the encrypted data is reduced to two clocks of 39 bits and the training sequence is replaced by a 64-bit synchronization sequence. Finally, an access burst comprises eight initial tail bits, followed by a 41-bit synchronization sequence, 36 bits of encrypted data and three more tail bits. In this case, the guard period is 68.25 bits long.

When used for circuit-switched speech traffic, the channelisation scheme is as employed in GSM.

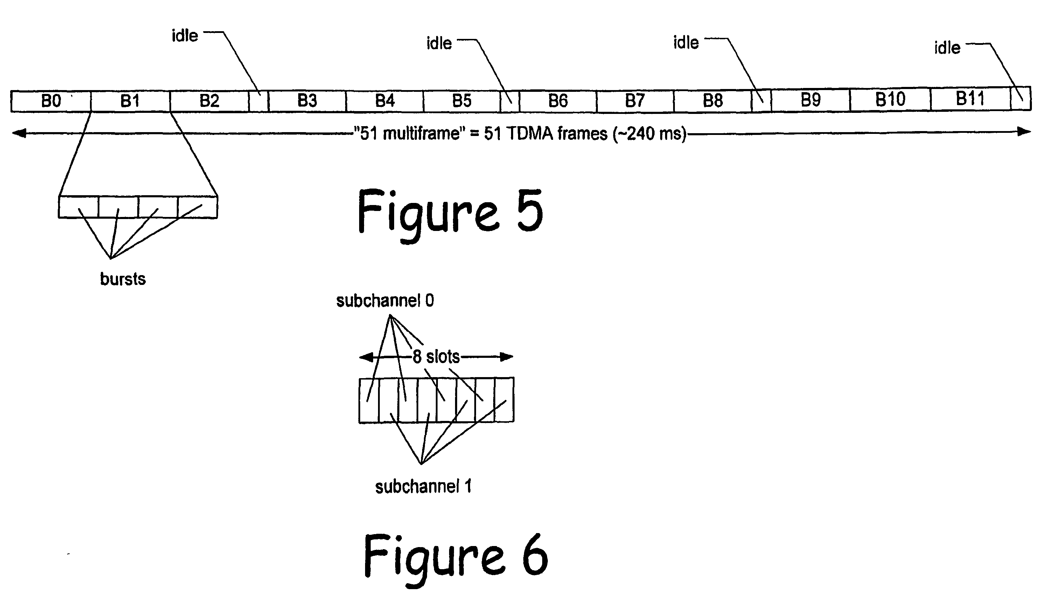

Referring to Figure 5, full rate packet switched channels make use of 12 4-slot radio blocks spread over a "51 multiframe". Idle slots follow the third, sixth, ninth and twelfth radio blocks.

Referring to Figure 6, for half rate, packet switched channels, both dedicated and shared, slots are allocated alternately to two sub-channels.

The baseband DSP subsystems 103, 203 and controllers 107, 207 of the mobile stations 6a, 6b and the base transceiver stations 4 are configured to implement two protocol stacks. The first protocol stack is for circuit switched traffic and is substantially the same as employed in conventional GSM systems. The second protocol stack is for packet switched traffic.

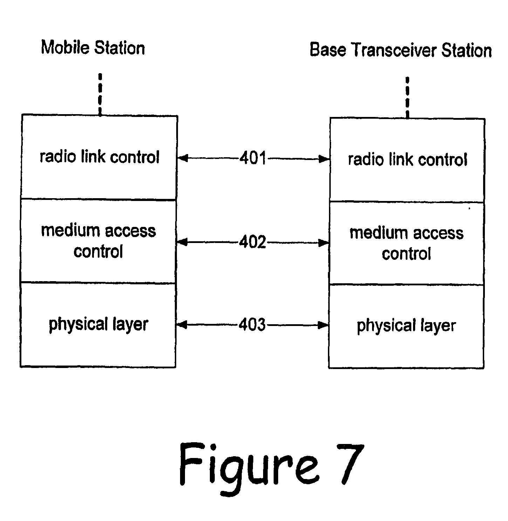

Referring to Figure 7, the layers relevant to the radio link between a mobile station 6a, 6b and a base station controller 4 are the radio link control layer 401, the medium access control layer 402 and the physical layer 403.

The radio link control layer 401 has two modes: transparent and non-transparent. In transparent mode, data is merely passed up or down through the radio link control layer without modification.

In non-transparent mode, the radio link control layer 401 provides link adaptation and constructs data blocks from data units received from higher levels by segmenting or concatenating the data units as necessary and performs the reciprocal process for data being passed up the stack. It is also responsible for detecting lost data blocks or reordering data block for upward transfer of their contents, depending on whether acknowledged mode is being used. This layer may also provide backward error correction in acknowledged mode.

The medium access control layer 402 is responsible for allocating data blocks from the radio link control layer 401 to appropriate transport channels and passing received radio blocks from transport channels to the radio link control layer 403.

The physical layer 403 is responsible to creating transmitted radio signals from the data passing through the transport channels and passing received data up through the correct transport channel to the medium access control layer 402.

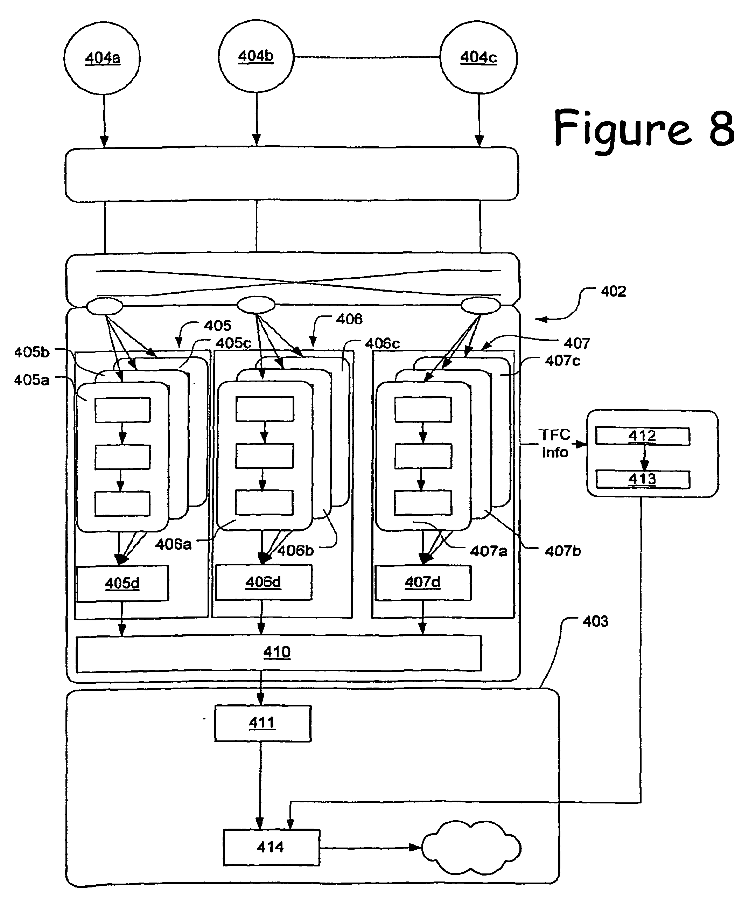

Referring to Figure 8, data produced by applications 404a, 404b, 404c propagates down the protocol stack to the medium access control layer 402. The data from the applications 404a, 404b, 404c can belong to any of a plurality of classes for which different qualities of service are required. Data belonging to a plurality of classes may be produced by a smgle application. The medium access control layer 402 directs data from the applications 404a, 404b, 404c to different transport channels 405, 406, 407 according to class to which it belongs.

Each transport channel 405, 406, 407 can be configured to process signals according to a plurality of processing schemes 405a, 405b, 405c, 406a, 406b, 406c, 407a, 407b, 407c. The configuration of the transport channels 405, 406, 407 is established during call setup on the basis of the capabilities of the mobile station 6a, 6b and the network and the nature of the application or applications 404a, 404b, 404c being run.

The processing schemes 405a, 405b, 405c, 406a, 406b, 406c, 407a, 407b, 407c are unique combinations of cyclic redundancy check 405a, 406a, 407a, channel coding 405b, 406b, 407b and rate matching 405c, 406c, 407c. These unique processing schemes will be referred to as "transport formats". An interleaving scheme 405d, 406d, 407d may be selected for each transport channel 405, 406, 407. Thus, different transport channels may use different interleaving schemes and, in alternative embodiments, different interleaving schemes may be used at different times by the same transport channel.

The combined data rate produced for the transport channels 405, 406, 407 must not exceed that of physical channel or channels allocated to the mobile station 6a, 6b. This places a limit on the transport format combinations that can be permitted. For instance, if there are three transport formats TF1, TF2, TF3 for each transport channel, the following combinations might be valid:-
TF1 TF1 TF2
TF1 TF3 TF3
but not
TF1 TF2 TF2
TF1 TF1 TF3

The data output by the transport channel interleaving processes are multiplexed by a multiplexing process 410 and then subject to further interleaving 411.

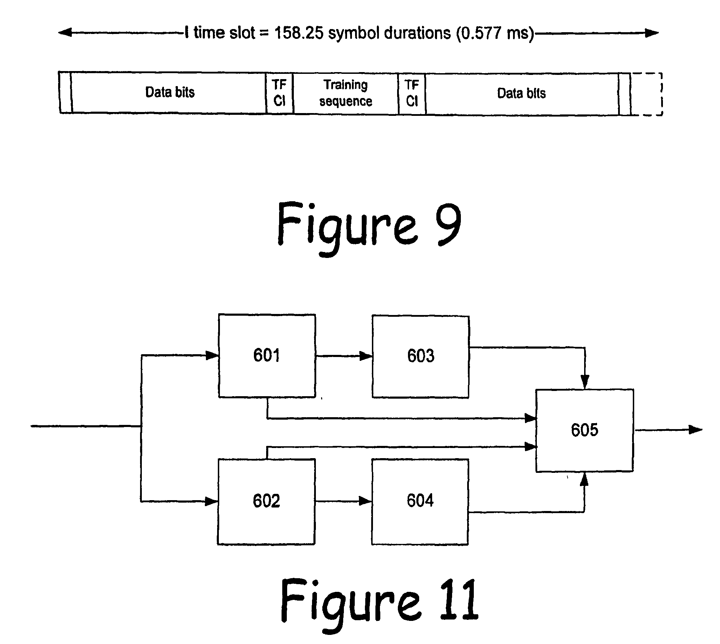

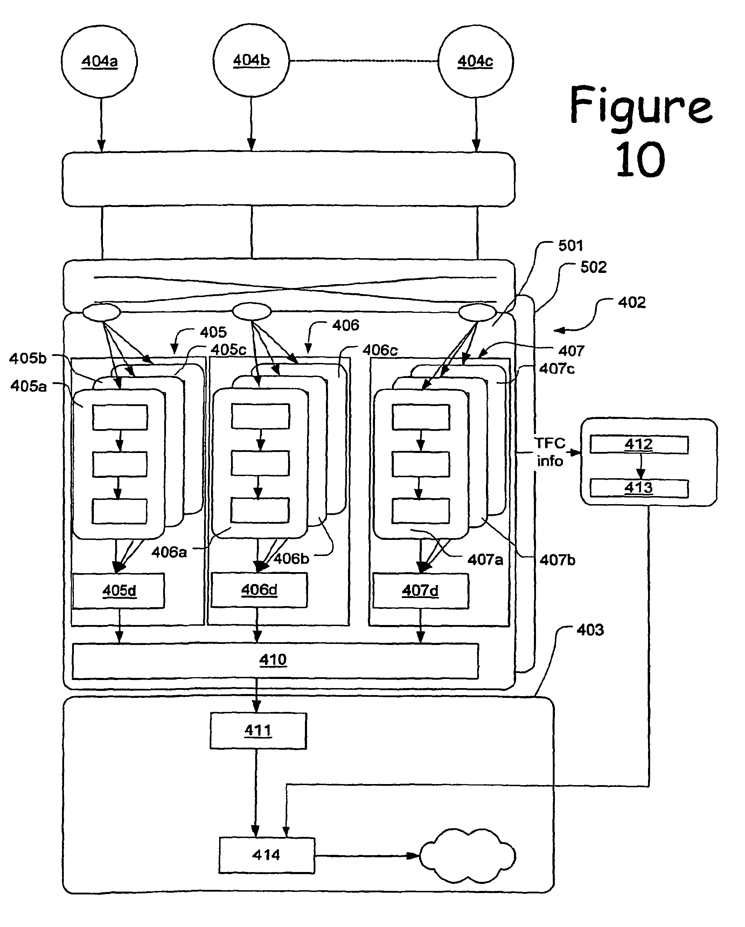

A transport format combination indicators is generated by a transport format combination indicator generating process 412 from information from the medium access control layer and coded by a coding process 413. The transport format combination indicator is inserted into the data stream by a transport format combination indicator insertion process after the further interleaving 411. The transport format combination indicator is spread across one radio block with portions placed in fixed positions in each burst, on either side of the training symbols (Figure 9) in this example. The complete transport format combination indicator therefore occurs at fixed intervals, i.e. the block length 20ms. This makes it possible to ensure transport format combination indicator detection when different interleaving types are used e.g. 8 burst diagonal and 4 burst rectangular interleaving. Since the transport format combination indicator is not subject to variable interleaving, it can be readily located by the receiving station and used to control processing of the received data.

The location of data for each transport channel within the multiplexed bit stream can be determined by a received station from the transport format combination indicator and knowledge of the multiplexing process which is deterministic.

In the foregoing, the physical channel or subchannel is dedicated to a particular mobile station for a particular call. When physical channels and subchannels are shared, it is necessary for a mobile stations to know when it has access to the uplink. For this purpose, in shared channel operation, uplink state flags are included in each downlink radio block. This flag indicates to the receiving mobile station whether it may start sending data in the next uplink radio block. For compatibility with GPRS and EGPRS mobile stations, the uplink status flags preferably occupy the same bit positions as are specified for EGPRS, e.g. data bits 150, 151, 168, 169, 171, 172 174, 175, 177, 178 and 195 of each 348-data-bit burst when 8PSK modulation is used. When GMSK modulation is used the situation is more complicated in that different bit positions are used in different burst, albeit in an overall cyclical manner. More particularly, in a four burst cycle, bits 0, 51, 56, 57, 58 and 100 are used in the first burst, bits 35, 56, 57, 58, 84 and 98 are used in the second burst, bits 19, 56, 57, 58, 68 and 82 are used in the third burst and bits 3, 52, 56, 57, 58 and 66 are used in the fourth burst.

Similarly, downlink status flags are included in downlink radio bursts to indicate which mobile station a burst is intended for. These flags always have the same position within bursts so that a receiving mobile station can easily locate them. In the preferred embodiment, the uplink and downlink flags have the same mapping onto mobile stations 6a, 6b.

A mobile station 6a, 6b using a shared subchannel includes its identifier, which is used for the above-described uplink and downlink access control, in its own transmission. Again, this identifier is located in a predetermined position within each burst. Although the network will generally know the identity of the transmitting mobile station 6a, 6b because it scheduled the transmission, corruption of transmissions from the base transceiver station could result in the wrong mobile station transmitting Including the identifier in this way enables the base transceiver station to identify the transmitting mobile station from the received signal and then decode the current block, starting by reading the transport format combination indicator and then selecting the correct transport channel decoding processes in dependence on the identity of the transmitting mobile station 6a, 6b and the decoded transport format combination indicator.

Referring to Figure 10, in another embodiment, the medium access control layer 402 can support a plurality of active transport format combination sets 501, 502. Each transport format combination set 501, 502 is applicable to transmission according to a different modulation technique, e.g. GMSK and 8PSK. All of the active transport format combination sets 501, 502 are established at call set up.

Signals in a control channel from the network to a mobile station 6a, 6b cause the mobile station 6a, 6b to switch modulation techniques and, consequently, transport format combination sets 501, 502. The control signals can be generated in response to path quality or congestion levels. The mobile station 6a, 6b may also unilaterally decide which modulation technique to employ.

Referring to Figure 11, at a receiving station, be it a mobile station 6a, 6b or a base transceiver station 4, a received signal is applied to demodulating processes 601, 602 for each modulation type. The results of the demodulating processes 601, 602 are analysed 603, 604 to determine which modulation technique is being employed and then the transport format combination indicator is extracted 605 from the output of the appropriate demodulated signal and used to control further processing of the signal.

## Claims

1. A method of transmitting a radio signal, the method comprising implementing a protocol stack having at least a physical layer (403) and a medium access control layer (402) including a plurality of transport channels (405, 406, 407) which are multiplexed to produce a data stream carried by a physical layer signal, each transport channel (405, 406, 407) being processed in a respectively selected manner, **characterised in that** a code identifying said selected manners is included in said data stream.

2. A method according to claim 1, wherein said physical layer signal comprises a TDMA signal and said code is transmitted in predetermined locations in the data stream.

3. A method according to claim 2, wherein said code is distributed across a plurality of bursts.

4. A radio transmitter comprising radio transmitting circuitry (102; 202) and processing means (103, 107; 203, 207), the processing means (103, 107; 203, 207) being configured to implement a protocol stack having at least a physical layer (403) and a medium access control layer (402) including a plurality of transport channels (405, 406, 407) which are multiplexed to produce a data stream which is carried by a physical layer signal, each transport channel (405, 406, 407) being processed in a respectively selected manner, **characterised in that** the processing means (103, 107; 203, 207) is configured to include a code identifying said selected manners in said data stream.

5. A radio transmitter according to claim 4, wherein said physical layer signal comprises a TDMA signal and said code and said code is transmitted in predetermined locations in the data stream.

6. A radio transmitter according to claim 5, wherein said code is distributed across a plurality of bursts.

7. A system comprising a radio receiver and a radio transmitter, the radio transmitter being as claimed in any of claims 4 to 6.

## Patentansprüche

1. Verfahren zur Übertragung eines Funksignals, welches Verfahren das Implementieren eines Protokollstacks umfaßt, das wenigstens eine physikalische Schicht (403) und eine Medienzugangskontrollschicht (402) einschließlich einer Mehrzahl von Transportkanälen (405, 406, 407) umfaßt, die gemultiplext werden, um einen Datenstrom zu erzeugen, der durch ein physikalische-Schicht-Signal getragen wird, wobei jeder Transportkanal (405, 406, 407) in einer jeweils ausgewählten Weise verarbeitet wird, **dadurch gekennzeichnet, dass** ein Code, der die ausgewählten Weisen identifiziert, im Datenstrom enthalten ist.

2. Verfahren nach Anspruch 1, wobei das physikalische-Schicht-Signal ein TDMA-Signal enthält, und der Code an vorbestimmten Stellen im Datenstrom übertragen wird.

3. Verfahren nach Anspruch 2, wobei der Code über eine Mehrzahl von Bursts verteilt ist.

4. Funksender, umfassend eine Funksendeschaltung (102; 202) und eine Verarbeitungseinrichtung (103, 107; 203, 207), wobei die Verarbeitungseinrichtung (103, 107; 203, 207) zur Implementierung eines Protokollstacks ausgelegt ist, der wenigstens eine physikalische Schicht (403) und eine Medienzugangskontrollschicht (402) einschließlich einer Mehrzahl von Transportkanälen (405, 406, 407) enthält, die gemultiplext werden, um einen Datenstrom zu erzeugen, der durch ein physikalische-Schicht-Signal getragen wird, wobei jeder Transportkanal (405, 406, 407) in einer jeweils ausgewählten Weise verarbeitet wird, **dadurch gekennzeichnet, dass** die Verarbeitungseinrichtung (103, 107; 203, 207) dazu ausgelegt ist, einen Code einzufügen, der die ausgewählten Weisen im Datenstrom identifiziert.

5. Funksender nach Anspruch 4, wobei das physikalische-Schicht-Signal ein TDMA-Signal sowie den Code enthält, und der Code an vorbestimmten Stellen im Datenstrom übertragen wird.

6. Funksender nach Anspruch 5, wobei der Code über eine Mehrzahl von Bursts verteilt ist.

7. System, umfassend einen Funkempfänger und einen Funksender nach einem der Ansprüche 4 bis 6.

## Revendications

1. Procédé d'émission d'un signal radio, le procédé comprenant la mise en oeuvre d'une pile de protocole ayant au moins une couche physique (403) et une couche de commande d'accès au support (402) incluant une pluralité de canaux de transport (405, 406, 407) qui sont multiplexés pour produire un flux de données transporté par un signal de la couche physique, chaque canal de transport (405, 406, 407) étant traité respectivement d'une manière sélectionnée, **caractérisé en ce qu'**un code identifiant lesdites manières sélectionnées est inclus dans ledit flux de données.

2. Procédé selon la revendication 1, dans lequel ledit signal de couche physique est constitué d'un signal AMRT et ledit code est émis à des endroits prédéterminés dans le flux de données.

3. Procédé selon la revendication 2, dans lequel ledit code est distribué sur une pluralité de rafales.

4. Émetteur radio comprenant un circuit d'émission radio (102 ; 202) et un moyen de traitement (103, 107 ; 203, 207), le moyen de traitement (103, 107 ; 203, 207) étant configuré pour mettre en oeuvre une pile de protocole comprenant au moins une couche physique (403) et une couche de commande d'accès au support (402) incluant une pluralité de canaux de transport (405, 406, 407) qui sont multiplexés pour produire un flux de données transporté par un signal de la couche physique, chaque canal de transport (405, 406, 407) étant traité respectivement d'une manière sélectionnée, **caractérisé en ce que** le moyen de traitement (103, 107 ; 203, 207) est configure pour inclure un code identifiant lesdites manières sélectionnées dans ledit flux de données.

5. Émetteur radio selon la revendication 4, dans lequel ledit signal de couche physique est constitué d'un signal AMRT et ledit code est émis à des endroits prédéterminés dans le flux de données.

6. Émetteur radio selon la revendication 5, dans lequel ledit code est distribué sur une pluralité de rafales.

7. Système comprenant un récepteur radio et un émetteur radio, l'émetteur radic étant selon l'une quelconque des revendications 4 à 6.
